# FASCICULE DE BREVET EUROPEEN

(11) **EP 1 489 268 B1**
(45) Date de publication et mention de la délivrance du brevet: **09.12.2009**
(21) Numéro de dépôt: 04102800.2
(22) Date de dépôt: 18.06.2004
(51) Int. Cl.: F01D 21/04

(54) **Agencement de supports de paliers pour arbre tournant d'un moteur d'aéronef et moteur d'aéronef équipé d'un tel agencement**
Walzenlagerträgeranordnung für einen Flugzeugmotor und mit einer solchen Anordnung ausgerüsteter Flugzeugmotor
Roll bearing supports arrangement for an aircraft engine rotary shaft and aircraft engine provided with such an arrangement

(30) Priorité: 20.06.2003 FR 0350240
(43) Date de publication de la demande: 22.12.2004
(73) Titulaire: SNECMA, 75015 Paris (FR)
(72) Inventeur: BOUCHY, Ga l, 77540, LA CHAPELLE IGER (FR); MAZELET, Alain, 91120, PALAISEAU (FR); MARTIN, Daniel, Jean-Marie, 77720, BOMBON (FR); MOREL, Patrick, Charles, Georges, 77590, CHARTRETTES (FR)
(74) Mandataire: Poulin, Gérard

(56) Documents cités:
- EP-A- 1 008 726
- EP-A- 1 126 137
- FR-A- 2 115 316
- US-A- 6 109 022

## Description

### DOMAINE TECHNIQUE

La présente invention se rapporte au domaine technique des moteurs d'aéronefs.

L'invention vise plus précisément un agencement de supports de paliers pour un arbre tournant de moteur d'aéronef, apte à compenser les effets néfastes induits par l'utilisation d'un système découpleur. Un système découpleur, lorsqu'il est prévu sur un moteur d'aéronef, est activé par exemple en cas de balourd important de l'arbre tournant provoqué par exemple par une rupture d'aube de soufflante consécutive à une ingestion d'oiseau.

L'invention vise aussi un moteur d'aéronef équipé d'un tel agencement de supports de paliers pour arbre tournant.

Dans tout ce qui suit, on appellera « proximal » un élément qui est proche de l'arbre tournant, et « distal » un élément qui est éloigné de l'arbre tournant.

### ETAT DE LA TECHNIQUE ANTERIEURE

D'une manière générale, un moteur d'aéronef comporte un arbre tournant qui entraîne en rotation un ou plusieurs équipements, comme par exemple des aubes constituant une soufflante du moteur. L'arbre est maintenu par une structure de stator du moteur à l'aide de paliers et de supports de paliers. En cas d'ingestion d'un oiseau par le moteur, il peut se produire une rupture d'aube, qui provoque un balourd important. Les charges consécutives à ce balourd se propagent de l'arbre tournant vers la structure du moteur, et peuvent détériorer celle-ci au point d'empêcher la poursuite d'un vol de l'aéronef, ce qui conduit un certain nombre de constructeurs à installer des systèmes découpleurs. Mais ces découpleurs sont affectés d'effets néfastes, qui sont les suivants:
- d'un part, l'arbre tournant se déplace radialement de manière incontrôlée avec un débattement qui peut être important et qui s'entretient,
- d'autre part, l'arbre tournant n'étant plus tenu axialement, il est déporté vers l'avant, ce qui cause des dégâts considérables dans l'ensemble de la structure.

Un certain nombre de documents de l'art antérieur décrivent des dispositifs dont le but est de réduire les effets néfastes d'un tel balourd.

Le document EP 0 814 236 décrit un agencement de support de paliers pour arbre tournant portant à l'avant un équipement et s'étendant en arrière à partir de l'équipement.

Le document US 6 109 022 décrit un moteur à turbine à gaz comportant une soufflante qui est portée par un arbre. Un élément de support fragile maintient une relation coaxiale entre l'arbre et l'axe longitudinal du moteur.

Le document FR 2 115 316 décrit un perfectionnement au montage des arbres de rotor dans un moteur à turbine à gaz. Un premier palier soutient l'arbre au voisinage du rotor. Un second palier porte l'arbre à l'écart du rotor et un troisième palier soutient l'arbre à une autre distance du rotor. Le premier palier est conçu pour permettre l'inversion du rotor si ce dernier se déséquilibre.

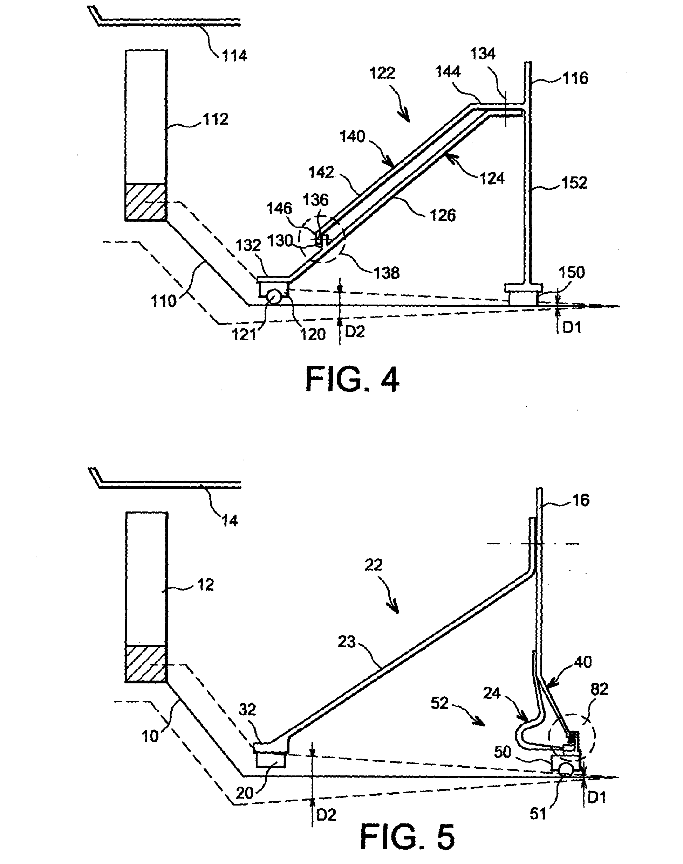

Sur la figure 4 est représanté de façon schématique l'exemple de réalisation qui est décrit de façon détaillée dans le document de l'art antérieur EP 0 814 236. Dans ce mode de réalisation particulier, l'arbre tournant 110 auquel sont reliées des aubes 112 de soufflante est guidé en rotation par un premier palier 120 encore appelé palier n°1, et par un deuxième palier 150 encore appelé palier n°2, en aval du premier palier 120. Les extrémités libres des aubes 112 de soufflante arrivent au voisinage d'un carter 114 entourant l'étage de soufflante. Le deuxième palier 150 est, dans l'exemple illustré, un palier à rouleaux relié à la structure 116 du turboréacteur par un support de deuxième palier 152. Le premier palier 120 est, dans l'exemple, un palier à billes 121 relié à la structure 116 du moteur d'aéronef par un support de premier palier 122. Le support de premier palier 122 comporte un premier élément 124 et un second élément 140 présentant des raideurs différentes. Le second élément 140 (chemin d'efforts raide) présente une raideur plus élevée que le premier élément 140 (chemin d'efforts souple).

Le premier élément 124 comprend une première paroi tronconique flexible 126 se prolongeant à son extrémité la plus éloignée du premier palier 120 par une première bride distale 128 et se prolongeant, à son autre extrémité, axialement par un organe 132 enserrant le palier 120 et radialement vers l'extérieur par une première bride proximale 130.

Le second élément 140 présente une seconde paroi tronconique flexible 142 se prolongeant à son extrémité la plus éloignée du premier palier 120 par une seconde bride distale 144, et se prolongeant à son autre extrémité radialement vers l'intérieur par une seconde bride proximale 146. Les deux brides distales 128, 144 sont fixées l'une à l'autre et à la structure 116 par l'intermédiaire de boulons 134. Les deux brides proximales 130, 146 sont fixées l'une à l'autre par l'intermédiaire d'éléments de liaison dits éléments fusibles 136, qui sont aptes à se rompre par cisaillement sous l'effet d'un effort radial supérieur ou égal à une valeur prédéterminée, lesdits éléments fusibles pouvant être des boulons. Sur la figure 4, on repère par 138 la zone fusible, c'est-à-dire la zone où agissent les éléments fusibles.

En fonctionnement normal du moteur, l'arbre tournant est relié à la structure par la combinaison du chemin d'efforts raide et du chemin d'efforts souple du support de premier palier, les efforts étant transmis principalement par le chemin d'efforts raide.

Si un balourd accidentel et important survient, les éléments fusibles cèdent. Le chemin d'efforts raide n'est plus mis en oeuvre. La rupture des éléments fusibles permet d'éviter une détérioration de la structure du moteur, en empêchant les charges dues au balourd de se propager de l'arbre à la structure par l'intermédiaire du chemin raide du support de premier palier.

Les efforts sont alors transmis uniquement par le chemin d'efforts souple. Cette configuration permet d'optimiser le comportement du moteur, c'est-à-dire de minimiser les vibrations pour une charge donnée. Le moteur peut ainsi fonctionner en mode dégradé, pendant une durée suffisante pour permettre un atterrissage de l'aéronef.

Par ailleurs, la solution apportée par le document EP 0 814 236 est compatible avec un positionnement axial du palier tenu par un tel support de palier, après rupture des éléments fusibles, c'est-à-dire lorsque le moteur fonctionne en mode dégradé. Ledit positionnement axial est obtenu au moyen du chemin d'efforts souple. Un palier à effet de butée peut être associé au chemin d'efforts souple, par exemple un palier à billes, pour maintenir le positionnement axial de l'arbre lui-même et reprendre la poussée axiale à laquelle l'arbre est soumis.

Mais avec l'agencement de supports de paliers de l'exemple de réalisation qui est décrit de façon détaillée dans le document EP 0 814 236, le débattement radial de l'arbre tournant 110 s'accroît d'arrière en avant, comme illustré sur la figure 4 par les débattements radiaux D1 et D2. D1 représente le débattement radial de l'arbre tournant 110, mesuré à la position axiale du deuxième palier 150. D2 représente le débattement radial de l'arbre tournant 110, mesuré à la position axiale du premier palier 120. Avec une telle architecture mécanique, D2 est très supérieur à D1, et une conception mécanique d'un double chemin d'efforts au premier palier qui soit compatible avec des déplacements aussi importants, est d'une mise en oeuvre compliquée.

### EXPOSÉ DE L'INVENTION

Le but de la présente invention est de proposer un agencement de supports de paliers pour arbre tournant de moteur d'aéronef, qui comporte un chemin d'efforts raide et un chemin d'efforts souple compatibles avec les déplacements de l'arbre après découplage, et qui sont de mise en oeuvre aisée.

Selon un premier aspect, l'invention concerne un agencement de supports de paliers pour arbre tournant d'un moteur d'aéronef, ledit arbre tournant portant à l'avant un équipement et s'étendant en arrière à partir de l'équipement, ledit arbre étant monté sur un premier palier avant supporté par un support de premier palier et sur un deuxième palier arrière supporté par un support de deuxième palier, le premier et le deuxième palier étant reliés à une structure de stator du moteur par des supports de palier dont l'un au moins comporte N>1 éléments agissant sensiblement en parallèle pour relier simultanément le palier à ladite structure, parmi lesquels N-1 desdits N éléments effectuent cette liaison par l'intermédiaire de moyens fusibles. Celui des deux supports de palier qui comporte lesdits N>1 éléments est le support de deuxième palier.

De préférence, le deuxième palier est un palier à effet d'arrêt axial. Dans ce cas, le premier palier n'est pas un palier à effet d'arrêt axial.

De préférence, ledit support de deuxième palier comporte deux éléments agissant sensiblement en parallèle et reliant simultanément le palier à ladite structure, lesdits deux éléments présentant des raideurs différentes et définissant un élément raide et un élément souple, ledit élément raide effectuant ladite liaison entre ledit deuxième palier et ladite structure par l'intermédiaire de moyens fusibles.

De préférence, ledit élément raide présente, en coupe longitudinale, un profil sensiblement rectiligne.

De préférence, ledit élément souple présente, en coupe longitudinale, un profil ayant sensiblement une forme d'épingle ayant une ou plusieurs courbures. Selon une variante, ledit profil en forme d'épingle comporte deux courbures.

De préférence, ledit support de palier à N>1 éléments comporte en outre des moyens de butée radiale pour limiter le débattement radial de l'arbre après mise en oeuvre des moyens fusibles.

De préférence, ledit support de palier à N>1 éléments comporte en outre des moyens d'amortissement associés aux moyens de butée radiale, après mise en oeuvre des moyens fusibles.

Sous l'une de ses formes les plus avantageuses, l'agencement de supports de paliers conforme à l'invention permet de combiner :
- la présence d'un double chemin d'efforts comportant un chemin d'efforts raide qui peut être supprimé par découplage en cas de balourd important et un chemin d'efforts souple par lequel l'arbre tournant reste accroché à la structure,
- la présence de moyens fusibles réalisant le découplage entre l'arbre tournant et la structure du moteur sur le chemin d'efforts raide, sous l'effet d'un deuxième palier incorporant une fonction d'arrêt axial, empêchant l'arbre tournant d'être propulsé vers l'avant après découplage entre l'arbre tournant et la structure sur le chemin d'efforts raide,
- des moyens de butée radiale pour limiter l'amplitude du débattement de l'arbre retenu à la structure par le chemin d'efforts souple après découplage,
- des moyens d'arrêt axial, pour reprendre les efforts axiaux transmis par le deuxième palier après découplage.

En comparaison avec l'agencement de supports de paliers de l'art antérieur décrit ci-dessus, l'agencement de supports de paliers conforme à l'invention présente l'avantage de disposer d'un double chemin d'efforts sur le support de deuxième palier plutôt que sur le support de premier palier, ce qui lui confère une configuration plus compacte et plus légère.

Selon un second aspect, l'invention concerne un moteur d'aéronef équipé d'un tel agencement de supports de paliers. De préférence, l'équipement est une soufflante du moteur comprenant des aubes portées par ledit arbre tournant.

### BRÈVE DESCRIPTION DES DESSINS

L'invention sera mieux comprise à la lecture de la description détaillée qui va suivre d'un mode de réalisation particulier de l'invention, en référence aux dessins annexés, dans lesquels :
- la figure 1 illustre, en coupe longitudinale, une partie de moteur d'aéronef montrant un agencement de supports de paliers d'arbre tournant conforme à l'invention ;
- la figure 2 illustre, en coupe longitudinale, une première variante de réalisation d'un support de palier à double chemin d'efforts conforme à l'invention ;
- la figure 3 illustre, en coupe longitudinale, une seconde variante de réalisation d'un support de palier à double chemin d'efforts conforme à l'invention ;
- la figure 4, déjà décrite, est une représentation schématique en coupe longitudinale d'un agencement de supports de paliers de l'art antérieur ; et
- la figure 5 est une représentation schématique en coupe longitudinale d'un agencement de supports de paliers conforme à l'invention.

### EXPOSÉ DÉTAILLÉ DE MODES DE RÉALISATION PARTICULIERS

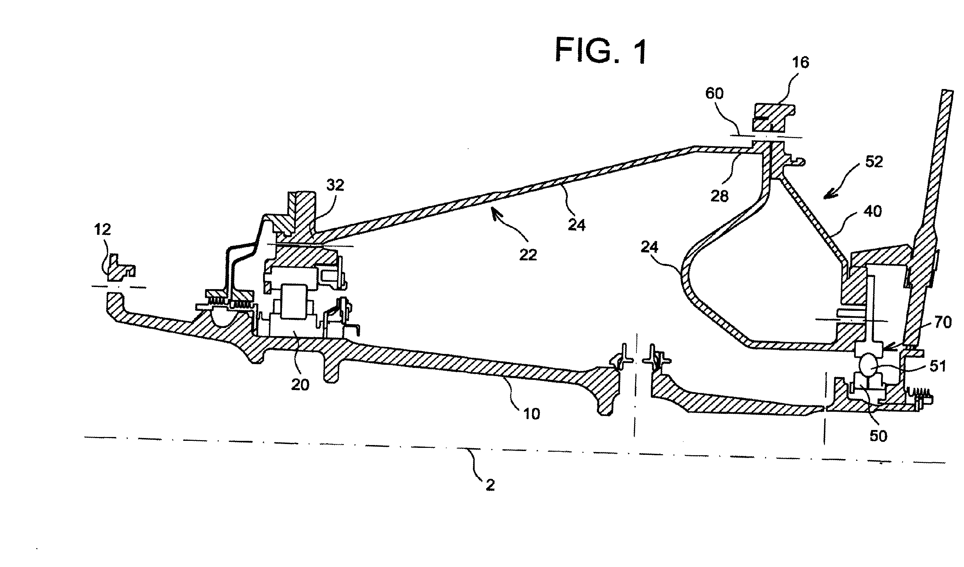

En se référant tout d'abord aux figures 1 et 5, on a représenté une partie de moteur d'aéronef, comportant un arbre 10 tournant autour d'un axe de rotation 2.

A l'avant de l'arbre tournant 10 se trouve un équipement 12, comme par exemple des aubes de soufflante, dont les extrémités libres arrivent au voisinage d'un carter 14 entourant l'étage de soufflante.

L'arbre tournant 10 est monté sur un premier palier 20 qui est un palier à rouleaux 21, et sur un deuxième palier 50 qui est un palier à billes 51.

Le moteur d'aéronef comporte une structure de stator 16 à laquelle sont reliés le premier palier 20 et le deuxième palier 50 respectivement par un support de premier palier 22 et par un support de deuxième palier 52.

Le support de premier palier 22 comporte une paroi de révolution 23 ayant en coupe longitudinale un profil sensiblement rectiligne. Ladite paroi 23 se prolonge vers l'avant par un organe 32 entourant le premier palier 20. Vers l'arrière, ladite paroi 23 est reliée à la structure 16, par l'intermédiaire d'un système découpleur classique, c'est-à-dire ne comportant qu'un seul chemin d'effort. A cet effet, la paroi 23 se termine par une bride 34 s'étendant radialement vers l'extérieur. Elle est fixée à la structure 16 par l'intermédiaire d'éléments fusibles 36, le tout définissant une zone fusible 38.

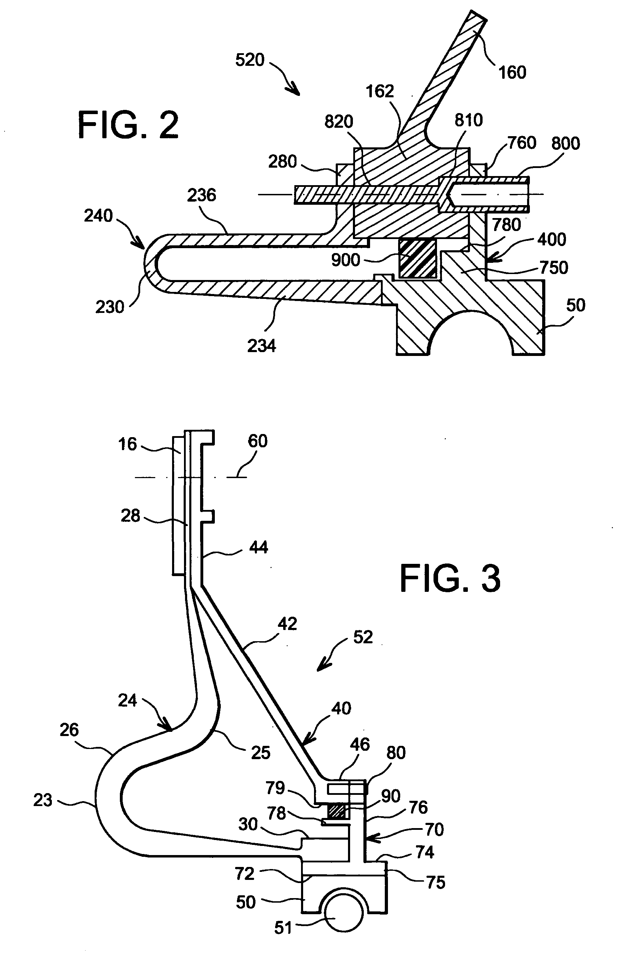

Le support de deuxième palier 52 est illustré de façon détaillée aux figures 2 et 3, qui en représentent respectivement deux variantes de réalisation.

On va tout d'abord décrire la première variante de réalisation du support de deuxième palier 52, en référence à la figure 3. Le support de deuxième palier 52 comporte un premier élément 24 et un second élément 40 présentant des raideurs différentes et constituant un double chemin d'efforts. Le second élément 40 (chemin d'efforts raide) présente une raideur plus élevée que le premier élément 24 (chemin d'efforts souple). Le support de deuxième palier 52 comporte également une bague de liaison 70 comportant une base 75 ayant une face intérieure 72 par laquelle elle vient enserrer la bague extérieure du deuxième palier 50 et une face extérieure 74 opposée à la face intérieure 72, ainsi qu'une collerette 76 s'étendant radialement vers l'extérieur.

Le premier élément 24 comporte une première paroi de révolution flexible 26 présentant, en coupe longitudinale, un profil sensiblement en forme d'épingle. Cette première paroi de révolution 26 se prolonge à son extrémité la plus éloignée du deuxième palier 50 par une première bride distale 28 fixée à la structure 16 du moteur par tout moyen conventionnel 60. Elle se prolonge à son extrémité la plus proche du deuxième palier 50 par une première bride proximale 30 qui se trouve orientée de façon à être sensiblement parallèle à la base 75. Ladite première bride proximale 30 est calée, sans être fixée, à la fois contre la face extérieure 74 de la base 75 et contre la collerette radiale 76 de la bague de liaison 70.

Le profil en forme d'épingle de la première paroi de révolution 26 présente, selon la première variante de réalisation du support de deuxième palier 52 (figure 3), deux courbures 23, 25. La courbure proximale 23, qui est la courbure la plus proche de la première bride proximale 30, a sa concavité orientée de manière à faire sensiblement face à la bague de liaison 70, tandis que la courbure distale 25, qui est la courbure la plus proche de la première bride distale 28, a sa concavité orientée de manière sensiblement inverse. De préférence, la première courbure proximale 23 présente un rayon de courbure inférieur au rayon de courbure de la courbure distale 25. Les rayons de courbure et les longueurs de branches de l'épingle sont choisis en fonction des propriétés de souplesse recherchées pour le chemin d'efforts souple.

Les courbures 23, 25 constituent des moyens d'arrêt axial qui permettent au chemin d'efforts souple de reprendre les efforts axiaux transmis par le deuxième palier, et de limiter le déplacement axial de l'arbre tournant vers l'avant lorsque les moyens fusibles (80, 800, 810) ont cédé, comme cela va être expliquer ci-après.

La bague de liaison 70 comporte, en outre, une partie formant saillie 78 s'étendant à partir de la collerette radiale 76 selon une direction sensiblement axiale, c'est-à-dire parallèle à la base 75, du côté par lequel les deux éléments 40, 24 viennent se fixer sur ladite bague de liaison 70. Cette partie formant saillie 78 a pour fonction de réaliser une butée radiale pour limiter l'amplitude du débattement radial D1 de l'arbre tournant 10 lorsque les moyens fusibles 80 ont cédé, comme cela va être expliqué ci-après.

Le second élément 40 comporte une seconde paroi de révolution flexible 42 présentant, en coupe longitudinale, un profil sensiblement rectiligne. Cette seconde paroi de révolution 42 se prolonge à son extrémité la plus éloignée du deuxième palier 50 par une seconde bride distale 44 fixée à la structure 16 du moteur par tout moyen conventionnel. Elle se prolonge à son extrémité la plus proche du deuxième palier 50 par une seconde bride proximale 46 fixée, par l'intermédiaire de moyens fusibles 80, à l'extrémité libre de la collerette radiale 76 de la bague de liaison 70. Sur l'exemple illustré, la seconde bride proximale 46 se trouve orientée de façon à être sensiblement parallèle à la base 75. Les moyens fusibles 80, qui peuvent être des boulons, se rompent sous l'effet d'une sollicitation en cisaillement.

On va maintenant décrire le fonctionnement de l'agencement de supports de paliers 20, 50, 22, 52, 520 conforme à l'invention, en se référant plus particulièrement à la figure 5, qui est une représentation schématique de l'agencement de supports de paliers 20, 50, 22, 52, 520 conforme à l'invention, analogue à l'agencement de supports de paliers 120, 150, 122, 152 de l'art antérieur déjà décrit et représenté schématiquement à la figure 4.

En fonctionnement normal, le deuxième palier 50 est relié à la structure 16 du moteur par la combinaison des deux éléments 24 et 40, les efforts étant transmis principalement par le chemin d'efforts raide, c'est-à-dire par le second élément 40. Sous l'effet d'un balourd dépassant un seuil prédéterminé, les moyens fusibles 36, localisés à la figure 5 dans la zone fusible 38 du support de premier palier 22, cèdent. Ensuite, les moyens fusibles 80, localisés dans une zone fusible 82 du support du deuxième palier 52, cèdent à leur tour. Le deuxième palier 50 n'est alors plus relié à la structure 16 que par le chemin d'efforts souple, c'est à dire par le premier élément 24 dont la paroi 26 présente un profil sensiblement en forme d'épingle. Le chemin d'efforts raide du support de deuxième palier 52, c'est-à-dire le second élément 40, n'est plus mis en oeuvre. L'arbre tournant 10 a alors tendance à se déplacer radialement autour de la position stable qu'il occupe en fonctionnement normal, selon un débattement radial D1, D2. En pratique, on rencontre des valeurs de débattements radiaux de l'ordre de 30 à 40 mm pour D2 et de l'ordre de 5 mm pour D1.

De plus, du fait de la forme en épingle de sa paroi 26, le premier élément 24 permet de retenir axialement l'arbre tournant 10, sans pour autant entraver son débattement radial. L'extrémité proximale de ce premier élément 24, matérialisée par la première bride proximale 30, est animée d'un déplacement selon une direction sensiblement radiale, ledit mouvement étant limité par la partie formant saillie 78, qui joue, pour cette première bride proximale 30, un rôle de butée radiale contre une face proximale 79 de la seconde bride proximale 46 du second élément 40.

L'écartement entre ladite face extérieure 74 de la base 75 et ladite partie formant saillie 78 est établi en fonction de l'effet de butée radiale recherché.

En option, un moyen d'amortissement 90, représenté schématiquement par une bague formant coussin d'amortissement à la figure 3, est associé à la partie formant saillie 78 pour amortir l'effet de butée. Il est disposé entre ladite partie formant saillie 78 et la seconde bride proximale 46 du second élément 40.

On vient d'expliquer comment cet agencement de supports de paliers 20, 50, 120, 150 particulier illustré sur la figure 5 permet d'installer un double chemin d'efforts en un lieu où le débattement radial de l'arbre tournant 10 est relativement faible, contrairement à la configuration de l'art antérieur.

On va maintenant décrire la deuxième variante de réalisation du support de deuxième palier, en référence à la figure 2. Le support de deuxième palier 50 est relié à une pièce 160 solidaire de la structure 16 du moteur. Il comporte un premier élément 240 constituant un chemin d'efforts souple et un second élément 400, solidaire du deuxième palier 50 ou rigidement fixé à celui-ci, constituant un chemin d'efforts raide.

Le premier élément 240 (chemin d'efforts souple) se présente sous la forme d'une épingle présentant, dans cette variante de réalisation, une seule courbure 230 dont la concavité est orientée de manière à faire sensiblement face au second élément 400. Le rayon de courbure et la longueur des branches de l'épingle sont choisis en fonction des propriétés de souplesse souhaitées pour le chemin d'efforts souple. Le premier élément 240 est fixé directement au deuxième palier 520 par l'extrémité libre de la branche proximale 234 de l'épingle. Il comprend, à l'extrémité libre de la branche distale 236 de l'épingle une bride distale 280 s'étendant selon une direction sensiblement radiale.

Le second élément 400 (chemin d'efforts raide) se présente sensiblement sous la forme d'une bride 760 s'étendant radialement vers l'extérieur à partir du deuxième palier 50, ladite bride 760 ayant une base 750 qui présente une face 780 orientée vers l'extérieur et sensiblement axiale.

Des moyens fusibles 800, par exemple des boulons, fixent ensemble la pièce 160 solidaire de la structure 16, le premier élément ou chemin d'efforts souple 240, et le second élément ou chemin d'efforts raide 400. Plus précisément, ces moyens fusibles 800 traversent successivement la bride radiale 760 du second élément 400, une extrémité 162 de la pièce 160, et la bride distale 280 du premier élément 240. Les moyens fusibles 800 sont conçus de manière à comporter une partie fusible 810, par laquelle ils fixent la bride radiale 760 et l'extrémité 162 de la pièce 160, et une partie non fusible 820, par laquelle ils fixent l'extrémité 162 de la pièce 160 et la bride distale 280. Les moyens fusibles 800 sont sensiblement orientés selon une direction axiale, et cèdent, dans leur partie fusible, par cisaillement sous l'effet d'un balourd dépassant un seuil prédéterminé. En option, les moyens fusibles 800 comportent dans la partie fusible 810 un aménagement destiné à calibrer leur effet de rupture, qui se présente, sur l'exemple illustré, sous la forme d'un alésage interne spécifique 830. En fonctionnement normal, l'ensemble constitué par le deuxième palier 50, le second élément 400, le premier élément 240, et l'extrémité 162 de la pièce 160, est maintenu rigidement fixé. Sous l'effet d'un balourd important, la partie fusible 810 des moyens fusibles 800 cède, tandis que leur partie non fusible 820 ne cède pas. Il se produit alors un déplacement relatif de la partie résiduelle de la bride radiale 760, qui correspond à la partie située entre les moyens fusibles 800 et la base 750, par rapport à l'extrémité 162 de la pièce 160 solidaire de la structure 16. Ce déplacement relatif est un déplacement radial, guidé par la face de l'extrémité 162 en contact avec la partie résiduelle de la bride radiale 760, puisque le reste de l'ensemble reste rigidement fixé. L'amplitude de ce déplacement radial est régie par la souplesse du chemin d'efforts souple. Cette amplitude est limitée par la face extérieure 780 de la base 750, qui remplit une fonction de butée radiale en venant au contact de l'extrémité 162 de la pièce 160. La valeur du jeu radial est établie en fonction de l'effet de butée radiale recherché. En option, un moyen d'amortissement 900, représenté schématiquement par une bague formant coussin d'amortissement à la figure 2, est associé à la base 750 pour amortir l'effet de butée radiale. Il est disposé entre ladite base 750 et l'extrémité 162 de la pièce 160.

La première variante de réalisation du support de deuxième palier 52 présente l'avantage de fournir une solution dont la mise en oeuvre est aisée.

La deuxième variante de réalisation du support de deuxième palier 520 présente, en outre, l'avantage d'une conception compacte qui lui procure un faible encombrement et un moindre poids.

Bien sûr, l'invention n'est pas limitée aux exemples de réalisation qui viennent d'être décrits.

On pourrait, sans sortir du cadre de l'invention, utiliser d'autres moyens fusibles que des boulons aptes à se rompre en cisaillement. Ces moyens fusibles pourraient être, par exemple, des rivets ou des tiges fusibles en cisaillement ou en traction, ou une pièce apte à se déformer ou à se rompre par flambage sous l'action d'un effort dépassant une valeur prédéterminée.

On pourrait, sans sortir du cadre de l'invention, remplacer le deuxième palier par un autre palier assurant la fonction d'arrêt axial, comme par exemple un roulement conique, à la place du roulement à billes.

En alternative aux moyens fusibles 800 de la deuxième variante de réalisation du support de deuxième palier 520, on pourrait envisager des moyens de fixation fusibles 810 et des moyens de fixation non fusibles 820 qui seraient distincts les uns des autres.

## Revendications

1. Agencement de supports de paliers (20, 50 ; 22, 52, 520) pour arbre tournant (10) d'un moteur d'aéronef, ledit arbre tournant (10) portant à l'avant un équipement (12) et s'étendant en arrière à partir de l'équipement (12), ledit arbre tournant (10) étant monté sur un premier palier avant (20) supporté par un support de premier palier (22) et sur un deuxième palier arrière (50) supporté par un support de deuxième palier (52, 520), le premier et le deuxième palier étant reliés à une structure de stator (16) du moteur par des supports de palier (22, 52, 520) dont l'un au moins comporte N>1 éléments élastiques (24, 240 ; 40, 400) agissant sensiblement en parallèle pour relier simultanément ledit palier (20, 50) à ladite structure (16), parmi lesquels N-1 desdits N éléments élastiques (24, 240 ; 40, 400) effectuent cette liaison par l'intermédiaire de moyens fusibles (80, 800, 810), **caractérisé en ce que** celui des deux supports de palier (22, 52, 520) qui comporte lesdits N>1 éléments élastiques (24, 240, 40, 400) est le support de deuxième palier arrière(52, 520).

2. Agencement de supports de paliers (20, 50 ; 22, 52, 520) selon la revendication 1, **caractérisé en ce que** le deuxième palier (52, 520) est un palier à effet d'arrêt axial.

3. Agencement de supports de paliers (20, 50 ; 22, 52, 520) selon la revendication 2, **caractérisé en ce que** le deuxième palier (52, 520) est un palier à billes (51).

4. Agencement de supports de paliers (20, 50; 22, 52, 520) selon l'une quelconque des revendications 1 à 3, **caractérisé en ce que** le premier palier (20) est un palier sans effet d'arrêt axial.

5. Agencement de supports de paliers (20, 50 ; 22, 52, 520) selon la revendication 4, **caractérisé en ce que** le premier palier (20) est un palier à rouleaux.

6. Agencement de supports de paliers (20, 50; 22, 52, 520) selon l'une quelconque des revendications 1 à 5, **caractérisé en ce que** ledit support de deuxième palier (52, 520) comporte deux éléments (24, 240 ; 40, 400) agissant sensiblement en parallèle et reliant simultanément ledit deuxième palier (50) à ladite structure (16), et **en ce que** lesdits deux éléments (24, 240 ; 40, 400) présentent des raideurs différentes et définissent un élément raide (40, 400) et un élément souple (24, 240), ledit élément raide (40, 400) effectuant ladite liaison entre ledit deuxième palier (50) et ladite structure (16) par l'intermédiaire de moyens fusibles (80, 800, 810).

7. Agencement de supports de paliers (20, 50 ; 22, 52, 520) selon la revendication 6, **caractérisé en ce que** l'élément raide (40, 400) présente en coupe longitudinale un profil sensiblement rectiligne.

8. Agencement de supports de paliers (20, 50; 22, 52, 520) selon la revendication 6 ou 7, **caractérisé en ce que** l'élément souple (24, 240) présente en coupe longitudinale un profil ayant sensiblement une forme d'épingle.

9. Agencement de supports de paliers (20, 50 ; 22, 52, 520) selon la revendication 8, **caractérisé en ce que** ledit profil en forme d'épingle comporte au moins une courbure (23, 25).

10. Agencement de supports de paliers (20, 50; 22, 52, 520) selon la revendication 8 ou 9, **caractérisé en ce que** ledit élément souple (24, 240) comporte des moyens d'arrêt axial (23, 25) pour reprendre les efforts axiaux transmis par le deuxième palier après mise en oeuvre des moyens fusibles (80, 800, 810).

11. Agencement de supports de paliers (20, 50; 22, 52, 520) selon l'une quelconque des revendications 1 à 10, **caractérisé en ce que** ledit support de deuxième palier (52, 520) à N>1 éléments comporte en outre des moyens de butée radiale (78, 780) pour limiter le débattement radial (D1, D2) de l'arbre tournant (10) après mise en oeuvre des moyens fusibles (80, 800, 810).

12. Agencement de supports de paliers (20, 50; 22, 52, 520) selon la revendication 11, **caractérisé en ce que** ledit support de deuxième palier (52, 520) à N>1 éléments comporte en outre des moyens d'amortissement (90, 900) associés aux moyens de butée radiale (78, 780).

13. Moteur d'aéronef, **caractérisé en ce qu'**il comporte un agencement de supports de paliers (20, 50 ; 22, 52, 520) selon l'une quelconque des revendications 1 à 12.

## Claims

1. Arrangement of bearing supports (20, 50; 22, 52, 520) for a rotating shaft (10) in an aircraft engine, with the said rotating shaft (10) carrying equipment at its front (12) and extending to the rear from the equipment (12), the said rotating shaft (10) being mounted on a first bearing (20) supported by a first bearing support (22) and on a second rear bearing (50) supported by a second bearing support (52, 520), said first and said second bearing being linked to a stator structure (16) of the engine by bearing supports (22, 52, 520) of which at least one is made up of N>1 elastic elements (24, 240 ; 40, 400) which act effectively in parallel to simultaneously connect the said bearing (20, 50) to the said structure (16), with N-1 of the said N elastic elements (24, 240 ; 40, 400) forming this connection through fusible components (80, 800, 810), **characterised in that** the one bearing support of the two bearing supports (22, 52, 520) which is made up of the said N>1 elastic elements (24, 240, 40, 400) is the second rear bearing support (52, 520).

2. Arrangement of bearing supports (20, 50 ; 22, 52, 520) as per claim 1, **characterised** so that the second bearing (52, 520) is an axial end-stop effect bearing.

3. Arrangement of bearing supports (20, 50 ; 22, 52, 520) as per claim 2, **characterised** so that the second bearing (52, 520) is a ball bearing (51).

4. Arrangement of bearing supports (20, 50; 22, 52, 520) as per any of claims 1 to 3, **characterised** so that the first bearing (20) is a bearing without any axial end-stop effect.

5. Arrangement of bearing supports (20, 50 ; 22, 52, 520) as per claim 4, **characterised** so that the first bearing (20) is a roller bearing.

6. Arrangement of bearing supports (20, 50; 22, 52, 520) as per any of claims 1 to 5, **characterised** so that the said second bearing support (52, 520) is made up of two elements (24, 240 ; 40, 400) effectively acting in parallel and simultaneously connecting the said second bearing (50) to the said structure (16), so that the two said elements (24, 240 ; 40, 400) possess different stiffnesses and form a stiff component (40, 400) and a flexible component(24, 240), with the said stiff element (40, 400) making the said connection between the said second bearing (50) and the said structure (16) by means of fusible components (80, 800, 810).

7. Arrangement of bearing supports (20, 50 ; 22, 52, 520) as per claim 6, **characterised** so that the stiff element (40, 400) has an essentially rectilinear longitudinal section.

8. Arrangement of bearing supports (20, 50 ; 22, 52, 520) as per claim 6 or 7, **characterised** so that the flexible element (24, 240) has an essentially needle-shaped longitudinal section.

9. Arrangement of bearing supports (20, 50 ; 22, 52, 520) as per claim 8, **characterised** so that the said needle-shaped element (23, 25) is made up of at least one curve (23, 25).

10. Arrangement of bearing supports (20, 50 ; 22, 52, 520) as per claim 8 or 9, **characterised** so that the said flexible element (24, 240) is made up of axial end-stop components (23, 25) to take up axial forces transmitted by the second bearing after operation of the fusible components (80, 800, 810).

11. Arrangement of bearing supports (20, 50; 22, 52, 520) as per any of claims 1 to 10, **characterised** so that the said second bearing support (52, 520) of N>1 elements is, in addition, made up of radial end-stop components (78, 780) to restrict the radial displacement (D1, D2) of the rotating shaft (10) after operation of the fusible components (80, 800, 810).

12. Arrangement of bearing supports (20, 50 ; 22, 52, 520) as per claim 11, **characterised** so that the said second bearing support(52, 520) of N>1 elements is made up, in addition, of damping components (90, 900) associated with radial end-stop components (78, 780).

13. Aircraft engine, **characterised** so that it is made up of an arrangement of bearing supports (20, 50 ; 22, 52, 520) as per any of claims 1 to 12.

## Patentansprüche

1. Anordnung von Lagerträgern (20, 50; 22, 52, 520) für die Drehwelle (10) eines Flugzeugmotors, wobei diese Drehwelle (10) vom eine Einrichtung (12) trägt und sich von dieser Einrichtung (12) aus nach hinten erstreckt, wobei diese Drehwelle (10) an einem ersten, vorderen Lager (20), das von einem Träger des ersten Lagers (22) gehalten wird, sowie an einem zweiten, hinteren Lager (50), das von einem Träger des zweiten Lagers (52, 520) gehalten wird, montiert ist, wobei das erste und das zweite Lager mit einem Statoraufbau (16) des Motors durch Lagerträger (22, 52, 520) verbunden sind, von denen wenigstens einer N>1 elastische Elemente (24, 240; 40, 400) aufweist, die im Wesentlichen parallel wirken, um dieses Lager (20, 50) gleichzeitig mit diesem Aufbau (16) zu verbinden, wobei davon N-1 dieser N elastischen Elemente (24, 240; 40, 400) diese Verbindung über Sicherungsmittel (80, 800, 810) herstellen,
**dadurch gekennzeichnet,**
**dass** derjenige der beiden Lagerträger (22, 52, 520), der diese N>1 elastischen Elemente (24, 240; 40, 400) aufweist, der Träger des zweiten Lagers (52, 520) ist.

2. Anordnung von Lagerträgern (20, 50; 22, 52, 520) nach Anspruch 1,
**dadurch gekennzeichnet,**
**dass** das zweite Lager (52, 520) ein Lager mit axialer Arretierwirkung ist.

3. Anordnung von Lagerträgern (20, 50; 22, 52, 520) nach Anspruch 2,
**dadurch gekennzeichnet,**
**dass** das zweite Lager (52, 520) ein Kugellager mit Kugeln (51) ist.

4. Anordnung von Lagerträgern (20, 50; 22, 52, 520) nach einem der Ansprüche 1 bis 3,
**dadurch gekennzeichnet,**
**dass** das erste Lager (20) ein Lager ohne axiale Arretierwirkung ist.

5. Anordnung von Lagerträgern (20, 50; 22, 52, 520) nach Anspruch 4,
**dadurch gekennzeichnet,**
**dass** das erste Lager (20) ein Rollenlager ist.

6. Anordnung von Lagerträgern (20, 50; 22, 52, 520) nach einem der Ansprüche 1 bis 5,
**dadurch gekennzeichnet,**
**dass** der genannte Träger des zweiten Lagers (52, 520) zwei Elemente (24, 240; 40, 400) aufweist, die im Wesentlichen parallel wirken und dieses zweite Lager (50) gleichzeitig mit dem Aufbau (16) verbinden, und dass diese beiden Elemente (24, 240; 40, 400) unterschiedliche Steifigkeiten aufweisen und ein steifes Element (40, 400) und ein biegsames Element (24, 240) bilden, wobei das steife Element (40, 400) diese Verbindung zwischen dem zweiten Lager (50) und diesem Aufbau (16) über Sicherungsmittel (80, 800, 810) herstellt.

7. Anordnung von Lagerträgern (20, 50; 22, 52, 520) nach Anspruch 6,
**dadurch gekennzeichnet,**
**dass** das steife Element (40, 400) im Längsschnitt ein im Wesentlichen geradliniges Profil aufweist.

8. Anordnung von Lagerträgern (20, 50; 22, 52, 520) nach Anspruch 6 oder 7,
**dadurch gekennzeichnet,**
**dass** das biegsame Element (24, 240) im Längsschnitt ein im Wesentlichen haamadeiförmiges Profil aufweist.

9. Anordnung von Lagerträgern (20, 50; 22, 52, 520) nach Anspruch 8,
**dadurch gekennzeichnet,**
**dass** dieses haarnadelförmige Profil mindestens eine Krümmung (23, 25) aufweist.

10. Anordnung von Lagerträgern (20, 50; 22, 52, 520) nach Anspruch 8 oder 9,
**dadurch gekennzeichnet,**
**dass** das biegsame Element (24, 240) Mittel zur axialen Arretierung (23, 25) umfasst, um die axialen Kräfte auszunehmen, die von dem zweiten Lager übertragen werden, nachdem die Sicherungsmittel (80, 800, 810) zum Einsatz gekommen sind.

11. Anordnung von Lagerträgern (20, 50; 22, 52, 520) nach einem der Ansprüche 1 bis 10,
**dadurch gekennzeichnet,**
**dass** der genannte Träger des zweiten Lagers (52, 520) mit N>1 Elementen ferner Mittel zum radialen Anschlag (78, 780) aufweist, um den radialen Ausschlag (D1, D2) der Drehwelle (10) zu begrenzen, nachdem die Sicherungsmittel (80, 800, 810) zum Einsatz gekommen sind.

12. Anordnung von Lagerträgern (20, 50; 22, 52, 520) nach Anspruch 11,
**dadurch gekennzeichnet,**
**dass** dieser Träger des zweiten Lagers (52, 520) mit N>1 Elementen ferner Dämpfungsmittel (90, 900) in Verbindung mit den Mitteln zum radialen Anschlag (78, 780) aufweist.

13. Flugzeugmotor,
**dadurch gekennzeichnet,**
**dass** es eine Anordnung von Lagerträgern (20, 50; 22, 52, 520) nach einem der Ansprüche 1 bis 12 aufweist.
